(19) Europäisches Patentamt
European Patent Office
Office européen des brevets

(11) EP 0 764 278 B1

(12) EUROPÄISCHE PATENTSCHRIFT

(45) Veröffentlichungstag und Bekanntmachung des Hinweises auf die Patenterteilung:
01.12.1999 Patentblatt 1999/48

(51) Int Cl.6: G01S 13/30, G01S 13/60

(21) Anmeldenummer: 95920769.7

(22) Anmeldetag: 07.06.1995

(86) Internationale Anmeldenummer:
PCT/DE95/00746

(87) Internationale Veröffentlichungsnummer:
WO 95/34829 (21.12.1995 Gazette 1995/54)

(54) **ANORDNUNG ZUR ORTSSELEKTIVEN GESCHWINDIGKEITSMESSUNG NACH DEM DOPPLER-PRINZIP**

DEVICE FOR SPEED MEASUREMENT AT SELECTED LOCATIONS USING THE DOPPLER PRINCIPLE

CINEMOMETRE GEOSELECTIF A EFFET DOPPLER

(84) Benannte Vertragsstaaten:
DE FR GB

(30) Priorität: 10.06.1994 DE 4420432

(43) Veröffentlichungstag der Anmeldung:
26.03.1997 Patentblatt 1997/13

(73) Patentinhaber: SIEMENS AKTIENGESELLSCHAFT
80333 München (DE)

(72) Erfinder:
• HEIDE, Patric
D-81371 München (DE)
• SCHUBERT, Richard
D-81739 München (DE)
• SCHWARTE, Rudolf
D-57250 Netphen (DE)
• MAGORI, Valentin
D-81539 München (DE)

(56) Entgegenhaltungen:
FR-A- 2 573 215          US-A- 2 676 317
US-A- 3 764 963

• MEINKE ET AL : "TASCHENBUCH DER HOCHFREQUENZ TECHNIK", BERLIN, 31-12-1992, SPRINGER-VERLAG

**Beschreibung**

Zur Messung der Geschwindigkeit über Grund von Land- und Schienenfahrzeugen und zur Bewegungsdetektion bei Alarmanlagen werden preisgünstige Mikrowellen-Dopplersensoren eingesetzt. Die Empfindlichkeit dieser Sensoren ist im wesentlichen durch das Rauschverhalten des Mikrowellengenerators begrenzt.

Bei den Dopplersensoren, die im continouswave (cw)-Betrieb arbeiten, ist zudem keine ortsselektive Dopplerauswertung möglich.

Bei der Puls-Doppler-Methode werden kurze, mit einer Pulswiederholrate PRF wiederkehrende, Mikrowellen-Pulse ausgesendet. Die Entfernungsselektion bei Puls-Doppler-Sensoren ist durch die zeitliche Trennung der Empfangssignale von Reflexionsobjekten unterschiedlicher Entfernungen bedingt.

Beim Puls-Doppler-Nahdistanzsensor ist eine feine Ortsauflösung erwünscht, dazu ist eine kurze Pulsdauer und damit eine hohe Übertragungsbandbreite erforderlich. Die mittlere Sendeleistung und damit auch die Empfindlichkeit der Empfangsstufe wird dabei jedoch reduziert. Dem kann durch eine größere Sende-Impulsleistung, oder eine höhere Pulswiederholrate PRF, was jedoch den maximal eindeutigen Entfernungsbereich einschränkt, oder durch eine Pulsintegration, die aber die maximale eindeutig messbare Geschwindigkeit begrenzt, begegnet werden. Schaltruckwirkungen im Pulsbetrieb machen bei den bekannten gepulsten Sensoren den Einbau von teuren, richtungsselektiven Komponenten wie z.B. Isolatoren oder getrennten Sende- und Empfangsantennen nötig.

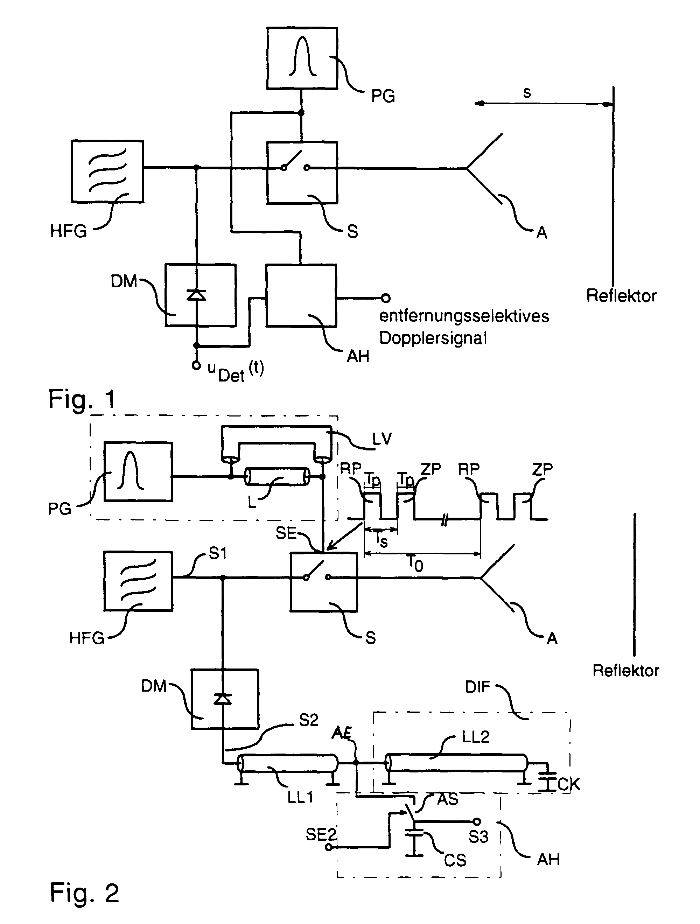

Die Figur 1 zeigt das Blockschaltbild eines Puls-Doppler-Sensors, wie er aus dem "Taschenbuch der Hochfrequenztechnik", Kapitel S1, Springer-Verlag, 5. Auflage, 1992 bekannt ist. Das vom Hochfrequenzgenerator HFG - einem Mikrowellenoszillator - erzeugte Mikrowellensignal wird mit Hilfe eines Mikrowellenschalters S mit einem Amplituden-Kontrastverhältnis k:

$$k = \frac{A_1}{A_2} > 1$$

mit:

$A_1$ = Amplitude während des Schaltzustands $\alpha$
$A_2$ = Amplitude während des Schaltzustands $\beta$
$\alpha$ = Schaltzustand während dem der Mikrowellenschalter MWS leitend ist
$\beta$ = Schaltzustand während dem der Mikrowellenschalter MWS sperrend ist

zwischen zwei Schaltzuständen $\alpha$ und $\beta$ umgeschaltet und über eine Sende-/Empfangsantenne A abgestrahlt. Sende- und Empfangs feldstärke $\underline{E}_S$, $\underline{E}_R$ überlagern sich zwischen dem Hochfrequenzgenerator HFG und dem Reflexionsobjekt zu einer stehenden Welle. Eine preiswerte Möglichkeit zur Gewinnung von Dopplersignalen ist die homodyne Detektion durch Gleichrichtung der stehenden Welle unter Verwendung einer Schottkydiode. Die Spannung $u_{Det}(t)$ am Demodulator DM, auch als Detektor bezeichnet, ergibt sich aufgrund der quadratischen Diodenkennlinie bei cw-Betrieb zu:

$$u_{Det}(t) \cong (\underline{E}_S + \underline{E}_R)^2 = E_S{}^2 + E_R{}^2 +$$

$$2E_S E_R \cos(\varphi(t)) \approx E_S{}^2 + 2E_S E_R \cos(\varphi(t))$$

mit:

$\underline{E}_S$ = Sendefeldstärke
$\underline{E}_R$ = Empfangs feldstärke
$2E_S E_R \cos(\varphi(t))$ = Nutzsignal (Dopplersignal)
$E_R \ll E_S$
$\varphi(t)$ = Phasenverschiebung zwischen der Sende feldstärke $\underline{E}_S$ und der Empfangs feldstärke $\underline{E}_R$

Aufgrund des Rauschens des Hochfrequenzgenerators HFG ist der dem gleichrichgerichteten Anteil des Oszillatorsignals entsprechende Term $E_S{}^2$ keine Konstante. Die Empfangsempfindlichkeit ist durch das Verhältnis der Schwankungsbreite des Terms $E_S{}^2$ zur Amplitude des Dopplersignals bestimmt. In Abweichung zum CW-Betrieb liegt im Pulsbetrieb ( im idealen Fall ist das Amplitudenkontrastverhältnis k >> 1) nur im Schaltzustand $\alpha$, wobei $\alpha$ den Durchlaßbetrieb kennzeichnet, ein Dopplersignal an dem Demodulator DM an und kann dort abgetastet werden, wobei durch wiederholte Umschaltung zwischen den Zuständen $\alpha$ und $\beta$ die Messung des Dopplersignals mit einer Wiederholrate PRF wiederholt wird. Durch Interpolation aller Abtastwerte für das Dopplersignal z.B. mit Hilfe eines Abtast/Haltegliedes AH kann ein ortsselektioves, zeitkontinuierliches Dopplersignal aus den Abtastpulsen rekunstruiert werden. Ein Nachteil dieser Methode ist, daß die Abtastwerte durch Umschaltspikes, Oszillatorrauschen beeinträchtigt und aufgrund endlichen Amplitudenkontrastverhältnises k < ∞ auch einen Signalanteil aus unerwünschten Entfernungsbereichen enthält. Diese Nachteile wurden bisher unter Verwendung von Mikrowellenschaltern mit hohem Schaltkontrast, richtungsselektiven Elementen z.B. Isolatoren, Zirkulatoren oder getrennten Sende-/Empfangsantennen nur teilweise behoben. Diese Maßnahmen erhöhen den Kosten- und Schaltungsaufwand beträchtlich.

Die Aufgabe der Erfindung ist es, eine Anordnung zur ortsselektiven Geschwindigkeitsmessung anzugeben, bei der Störungen in Form von Signalrauschen, Schaltspikes und Signale aus unerwünschten Entfernungsbereichen oder naheliegende Reflektoren entscheidend reduziert werden und damit die Meßgenauigkeit erhöht werden kann.

Die Aufgabe wird durch einen Puls-Dopplersensor gemäß dem Patentanspruch 1 gelöst.

Bei den Weiterbildungen gemäß den Ansprüchen 2 bis 7 ist ein einfacher Aufbau zur Erzeugung des Schaltsignals (Pulsfolge) möglich.

Anhand der Figuren soll die Erfindung näher erläutert werden.

Figur 1     zeigt den Aufbau einer Anordnung zur ortsselektiven Geschwindigkeitsmeßung, wie er aus dem Taschenbuch der Hochfrequenztechnik, Kapitel S1, Springer-Verlag, 5. Aufl. 1992 bekannt ist.

Figur 2     zeigt den prinzipiellen Aufbau der erfindungsgemäßen Anordnung zur ortsselektiven Geschwindigkeitsmeßung.

Figur 3     zeigt ein zu der Geschwindigkeitsmeßanordnung korrespondierendes Minkowski-Diagramm und zugehörige typische Signalverläufe.

Figur 4     zeigt eine alternative Anordnung zur Erzeugung einer Pulsfolge.

Der in Figur 2 dargestellte Pulsgenerator PG erzeugt einen mit der Periode $T_0$ wiederkehrenden ersten Impuls, der im folgenden Referenzpuls RP bezeichnet wird. Dieses Referenzpulssignal gelangt über zwei unterschiedlich lange Leitungen L und LV zum Steuereingang SE des Schaltelements S. Der Teil des Referenzpulssignals, der den längeren Weg über das Verzögerungsglied LV nimmt, gelangt, um die Zeitspanne $T_S$ gegenüber dem über die kürzere Leitung L laufenden Signalanteil des Referenzpulses RP verzögert, an den Steuereingang SE des Schaltements S. Somit liegt am Steuereingang SE des Schaltelements S ein mit der Periode $T_0$ wiederkehrender Referenzpuls RP und ein ebenfalls mit der Periode $T_0$ wiederkehrender und um den Pulsabstand $T_S$ gegenüber dem Referenzpuls RP verschobener Impuls, Zielpuls ZP genannt, an.

Liegt einer der beiden Impulse RP oder ZP am Steuereingang SE des Schaltelements S an, so wird für die Pulsdauer $T_p$ ein Mikrowellensignal MS das für diese Dauer dem vom Hochfrequenzgenerator HFG erzeugten hochfrequenten Signal S1 entspricht, an die Antenne A durchgeschaltet. Das Mikrowellensignal MS, welches von der Antenne A abgestrahlt wird, ist das pulsmodulierte Signal aus dem hochfrequenten Signal S1 und dem Referenzpuls RP oder das pulsmodulierte Signal aus dem hochfrequenten Signal S1 und dem Zielpuls ZP oder ein Restsignal, das aufgrund des endlichen Schaltkontrasts des Schaltelements S nicht auf Null abklingt. Da das Schaltelement S leitend ist, gelangt gleichzeitig auch das Empfangssignal (ein Echo) zum Demodulator DM, so daß dort ein Dopplersignal S2 entsteht, welches abgetastet werden kann. Der Pulsabstand $T_S$ ist so eingestellt, daß das Echo des während des Anliegens des Referenzpulses RP abgestrahlten hochfrequenten Signals S1, welches aus der Entfernung $s = c \cdot T_S/2$ reflektiert wird, zeitgleich mit dem Auftreten des Zielpulses ZP eintrifft und zum Demodulator DM gelangt. Während der Zielpuls ZP am Steuereingang SE des Schaltelements S anliegt, wird erneut ein mit dem Zielpuls ZP moduliertes hochfrequentes Signal S1 abgestrahlt. Das am Ausgang des Demodulators DM während des Auftretens des Zielpulses ZP zum Zeitpunkt $t_2$ anliegende zweite demodulierte Signal $S2(t_2)$ enthält zusätzlich zu allen Störsignalen die Information über den Reflektor oder Rückstreuer, während das erste demodulierte Signal $S2(t_0)$, das zum Zeitpunkt $t_0$ des Auftretens des Referenzpulses RP am Demodulatorausgang anliegt nur die Störanteile enthält. Aus dem Vergleich (der Differenzbildung) der beiden demodulierten Signale $S2(t_0)$ und $S2(t_2)$ ergibt sich ein von Störungen bereinigtes Signal S3, welches nur die Information über den Reflektor oder Rückstrahler enthält. Dabei werden sowohl das Generatorrauschen als auch die Einflüsse der Schaltrückwirkung und der naheliegenden Reflektoren und Reflexionen aus unerwünschten Entfernungsbereichen aufgrund des endlichen Schaltkontrasts $k < \infty$ eliminiert. Dies hat eine erhebliche Empfindlichkeitssteigerung und die beabsichtigte Erhöhung der Ortsselektivität zur Folge.

Der Meßvorgang wird mit einer Periode $T_0$ wiederholt. Dabei wird $T_0$ ausreichend groß gewählt, so daß die Messungen (Ziel, Referenz) unabhängig voneinander ablaufen, das heißt bei jeder neuen Messung keine Empfangssignale des vorangegangenen Meßvorgangs mehr auftreten.

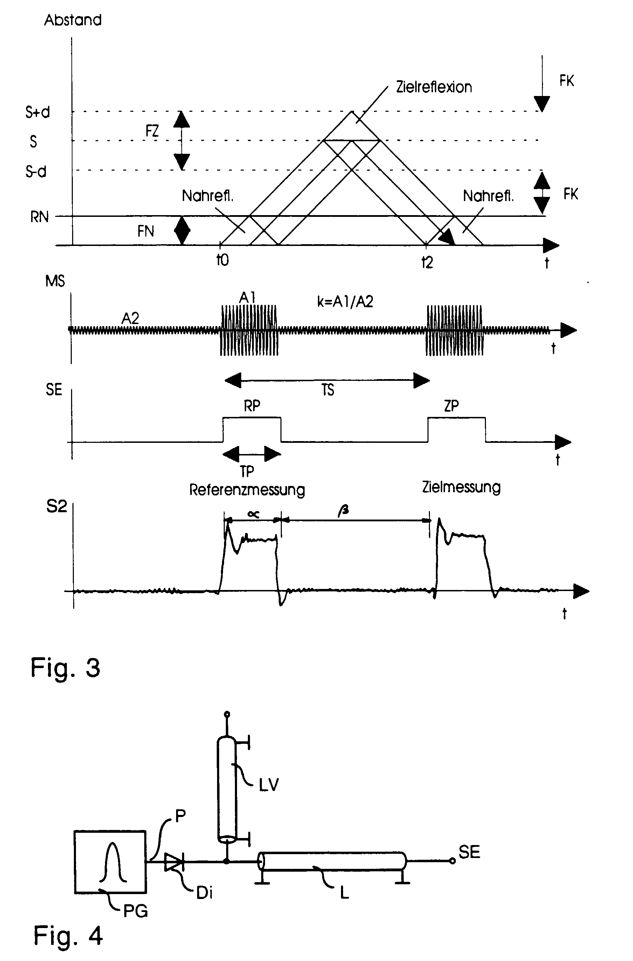

Die Reflexionen der Sendesignale können im Orts-/Zeitraum mit dem in Figur 3 gezeigten Minkowski-Diagramm dargestellt werden. Auf der Abszisse wird die Zeit und auf der Ordinate der Ort angetragen. Die Ordinate gliedert sich in drei Bereiche, den Nahbereich FN, den Zielbereich FZ und den Fernbreich FK, wobei der Nahbereich FN und der Zielbereich FZ für die Funktion wichtig sind. Zum Zeitpunkt $t_0$ zu dem der Referenzpuls RP am Steuereingang SE des Schaltelements S anliegt, wird das Schaltelement S, auch Mikrowellenschalter genannt, für die Zeit des Auftretens des Referenzpulses RP leitend geschaltet, was dem Schaltzustand $\alpha$ entspricht. Das vom Hochfrequenzgenerator HFG erzeugte kontinuierliche Hochfrequenzsignal S1 wird für die Zeit, die das Schaltelement S leitend ist, mit dem Referenzpuls RP moduliert an die Antenne A angelegt und abgestrahlt. Zum Zeitpunkt $t_2$ zu dem der Zielpuls ZP an dem Steuereingang SE des Schaltelements S anliegt, wird das Hochfrequenzsignal S1 mit dem Zielpuls ZP moduliert und für die Pulsdauer $T_p$ an die Antenne A angelegt und abstrahlt. Während dieser Pulsdauer $T_p$ wird gleichzeitig das zum Zeitpunkt $t_0$ ausgesandte und anschließend reflektierte Signal an der Antenne A empfangen.

Die Signalanteile $S2(t_0)$ und $S2(t_2)$, die das am Demodulatorausgang anliegende Signal S2 zum Zeit-

punkt $t = t_0$, $t = t_2$ enthält sind in folgender Tabelle angegeben:

| Signal / Zeitpunkt | t = t0 | t = t2 |
|---|---|---|
| Nahbereichsreflexion | X | X |
| Schaltpeaks | X | X |
| Oszillatorrauschen | X | X |
| CW-Anteil (wegen $k < \infty$) | X | X |
| Zielreflexion | | X |

Die Differenz aus beiden Signalanteilen ist ein von sämtlichen Störungen bereinigtes Signal S3.

Eine Abtastung des vom Demodulator gelieferten Signals mit simultaner Differenzbildung wird durch ein spezielles Abtast/Halteglied AH mit Differenzbildungsglied DIF durchgeführt.

Das demodulierte Signal S2, bestehend aus der Pulsfolge $S2(t_0)$ und $S2(t_2)$ wird über eine Leitung LL1 mit einem Abtastschalter AS verbunden und dann auf die Speicherkapazität CS geschaltet, wenn das Signal $S2(t_2)$ am Punkt AE anliegt. Die am Ende kurzgeschlossene Leitung LL2 ist in ihrer Länge so gewählt, daß sich zu dem Zeitpunkt zu dem der Signalanteil $S2(t_2)$ am Punkt AE anliegt, gleichzeitig auch der inverse Signalanteil $S2(t_0)$ dort anliegt, so daß insgesamt die Differenz zur Speicherkapazität CS durchgeschaltet wird. Die Spannungsinversion geschieht durch einen hochfrequenzmäßigen Kurzschluß durch eine Kapazität CK am Ende der Leitung LL2. Das Durchschalten des Signals an den Punkt AE zur Speicherkapazität CS wird durch einen Steuerpuls SE2 ausgelöst, der vom Pulsgenerator PG abgeleitet werden kann.

Eine alternative Anordnung zur Erzeugung der Pulsfolge kann, wie in Figur 4 gezeigt, aussehen. Ein vom Pulsgenerator PG erzeugter positiver Puls P schaltet die Diode Di durch und wird aufgeteilt auf die beiden Leitungen LV und L. Der in die Leitung LV gelangte eine Anteil des Pulses P wird am leerlaufenden Ende der Leitung LV mit +1 reflektiert und gelangt um den Pulsabstand $T_S$ verzögert gegenüber dem anderen Anteil an den Steuereingang SE des Schaltelements S. Der Referenzpuls RP entspricht damit dem Anteil des Pulses P, der lediglich die Leitung L durchlaufen hat, wohingegen der Zielpuls ZP dem Anteil des Pulses P entspricht, der sowohl die Leitung LV als auch die Leitung L durchlaufen hat.

Das Schaltelement S kann durch ein Element zur Amplitudenmodulation ersetzt werden. Die Pulsfolge ist nicht nur auf Pulse beschränkt. Es können alle Signalformen verwendet werden, die zur Modulation des hochfrequenten Signals S1 geeignet sind.

**Patentansprüche**

1. Puls-Dopplersensor,

   - bei dem ein Hochfrequenzgenerator (HFG) vorhanden ist, der für die Erzeugung eines Mikrowellensignales vorgesehen ist,
   - bei dem eine Antenne (A) vorhanden ist, die dafür vorgesehen ist, Mikrowellensignale abzustrahlen und zu empfangen,
   - bei dem der Hochfrequenzgenerator (HFG) über ein Schaltelement (S) mit der Antenne (A) verbunden ist, dadurch gekennzeichnet, dass
   - bei dem Mittel (PG, L, LV) zur Erzeugung einer Pulsfolge vorhanden sind, die dafür vorgesehen sind, das Schaltelement (S) während der Dauer ($T_P$) eines Referenzpulses (RP) und während der Dauer ($T_P$) eines um einen vorgegebenen Pulsabstand ($T_S$) späteren Zielpulses (ZP) leitend zu schalten,
   - bei dem ein Demodulator (DM) vorhanden ist, der so angeordnet ist, daß er eine Überlagerung des von dem Hochfrequenzgenerator (HFG) erzeugten Mikrowellensignales und eines Empfangssignales während der Dauer ($T_P$) des Referenzpulses ($R_P$) und während der Dauer ($T_P$) des Zielpulses (ZP) demoduliert,
   - bei dem ein Abtast/Halteglied (AH) vorhanden ist, das für ein Abtasten eines Signales vorgesehen ist,
   - bei dem ein Differenzbildungsglied (DIF) vorhanden ist, das dafür vorgesehen ist, zu einem Signal ein um den vorgegebenen Pulsabstand ($T_S$) späteres Signal, das invers zu dem ursprünglichen Signal ist, zu erzeugen, und
   - bei dem dieses Abtast/Halteglied (AH) und dieses Differenzbildungsglied (DIF) so angeordnet sind, daß ihnen ein von dem Demodulator (DM) demoduliertes Signal zugeführt wird und daß das von dem Differenzbildungsglied (DIF) erzeugte Signal dem Abtast/Halteglied (AH) zugeführt wird.

2. Puls-Dopplersensor nach Anspruch 1,

   - bei der die Mittel zur Erzeugung der Pulsfolge (PG, L, LV) einen Pulsgenerator (PG) zur Erzeugung des Referenzpulses (RP) und ein Verzögerungsglied (LV) zur Erzeugung des Zielpulses (ZP) aufweist.

3. Puls-Dopplersensor nach Anspruch 2,

   - bei der das Verzögerungsglied eine Verzögerungsleitung (LV) aufweist, welche parallel zu einer Leitung (L) geschaltet ist,
   - bei der die Verzögerungsleitung (LV) um die Länge, die dem Pulsabstand ($T_S$) entspricht, länger als die Leitung (L) ist.

4.  Puls-Dopplersensor nach Anspruch 2,

    -   bei der das Verzögerungsglied eine Verzögerungsleitung(LV)aufweist, welche an ihrem einen Ende leer laufend ist und an ihrem anderen Ende mit einer Diode (Di) und einer Leitung (L) verbunden ist,
    -   bei der die Diode (Di) mit dem Pulsgenerator (PG) verbunden ist.

5.  Puls-Dopplersensor nach einem der Ansprüche 1-4,

    -   bei der das Differenzbildungsglied (DIF) einen Speicher aufweist, mit welchem ein Signal ($S2(t_0)$) so lange gespeichert wird, bis das nächste Signal ($S2(t_2)$) verfügbar ist.

6.  Puls-Dopplersensor nach Anspruch 5,

    -   bei der der Speicher des Differenzbildungsgliedes (DIF) einen kurzgeschlossenen Leiter (LL2) aufweist, an dessen Ende die Invertierung des Signals erfolgt, und
    -   bei der die Länge des kurzgeschlossenen Leiters (LL2) dem Pulsabstand ($T_S$) entspricht.

7.  Puls-Dopplersensor nach einem der Ansprüche 1 bis 6,

    -   bei der das Schaltelement (S) ein Element zur Amplitudenmodulation ist.

**Revendications**

1.  Détecteur Doppler à impulsions

    -   dans lequel est présent un générateur de haute fréquence (HFG) qui est prévu pour la production d'un signal à hyperfréquence,
    -   dans lequel est présente une antenne (A) qui est prévue pour émettre et recevoir des signaux à hyperfréquence,
    -   dans lequel le générateur de haute fréquence (HFG) est connecté à l'antenne (A) à travers un élément de commutation (S), caractérisé
    -   en ce qu'il comprend des moyens (PG, L, LV) pour la production d'une succession d'impulsions, qui sont prévus pour rendre l'élément de commutation (S) conducteur pendant la durée ($T_P$) d'une impulsion de référence (RP) et pendant la durée ($T_P$) d'une impulsion cible (ZP) qui est retardée d'un espacement d'impulsion ($T_S$) prédéterminé,
    -   en ce qu'il comprend un démodulateur (DM) qui est agencé de manière qu'il démodule une superposition du signal à hyperfréquence produit par le générateur de haute fréquence (HFG) et d'un signal de réception pendant la durée ($T_P$) de l'impulsion de référence ($R_P$) et pendant la durée ($T_P$) de l'impulsion cible (ZP),

    -   en ce qu'il comprend un élément de détection/maintien (AH) qui est prévu pour détecter un signal,
    -   en ce qu'il comprend un élément de formation de différence (DIF) qui est prévu pour produire, pour un signal, un signal retardé d'un espacement des impulsions ($T_S$) prédéterminé, qui est l'inverse du signal d'origine, et
    -   en ce que cet élément de détection/maintien (AH) et cet élément de formation de différence (DIF) sont agencés de telle manière qu'un signal démodulé par le démodulateur (DM) leur soit acheminé et de manière que le signal produit par l'élément de formation de différence (DIF) soit envoyé à l'élément de détection/maintien (AH).

2.  Détecteur Doppler à impulsions selon la revendication 1,

    -   dans lequel les moyens de production de la succession d'impulsions (PG, L, LV) présentent un générateur d'impulsions (PG) pour la production de l'impulsion de référence (RP) et un élément retardateur (LV) pour la production de l'impulsion cible (ZP).

3.  Détecteur Doppler à impulsions selon la revendication 2,

    -   dans lequel l'élément à retard présente une ligne à retard (LV) qui est connectée en parallèle avec une ligne (L),
    -   dans lequel la ligne à retard (LV) est plus longue que la ligne (L) d'une longueur qui correspond à l'espacement des impulsions ($T_S$).

4.  Détecteur Doppler à impulsions selon la revendication 2,

    -   dans lequel l'élément à retard présente une ligne à retard (LV) qui est à circuit ouvert à une de ses extrémités et qui, à son autre extrémité, est connectée à une diode (Di) et à une ligne (L),
    -   dans lequel la diode (Di) est connectée au générateur d'impulsions (PG).

5.  Détecteur Doppler à impulsions selon une des revendications 1-4,

    -   dans lequel l'élément de formation de différence (DIF) présente une mémoire avec laquelle un signal $(S2(t_0))$ est stocké jusqu'à ce que le signal suivant $(S2(t_2))$ soit disponible.

6. Détecteur Doppler à impulsions selon la revendication 5,

   - dans lequel la mémoire de l'élément de formation de différence (DIF) présente une ligne court-circuitée (LL2) à l'extrémité duquel se produit l'inversion du signal, et
   - dans lequel la longueur de la ligne court-circuitée (LL2) correspond à l'espacement des impulsions $(T_S)$.

7. Détecteur Doppler à impulsions selon une des revendications 1 à 6,

   - dans lequel l'élément de commutation (S) est un élément pour la modulation d'amplitude.

**Claims**

1. Pulse-Doppler sensor

   - in which there is a radio-frequency generator (HFG), which is provided for producing a microwave signal,
   - in which there is an antenna (A) which is provided for transmitting and receiving microwave signals
   - in which the radio-frequency generator (HFG) is connected to the antenna (A) via a switching element (S), characterized in that
   - in which there are means (PG, L, LV) for producing a pulse sequence, which are provided for the purpose of switching on the switching element (S) for the duration $(T_P)$ of a reference pulse (RP) and for the duration $(T_P)$ of a target pulse (ZP) which is delayed by a predetermined pulse interval $(T_s)$,
   - in which there is a demodulator (DM) which is arranged such that it demodulates a superposition of the microwave signal produced by the radio-frequency generator (HFG) and a received signal for the duration $(T_P)$ of the reference pulse $(R_P)$ and for the duration $(T_P)$ of the target pulse (ZP),
   - in which there is a sample-and-hold element (AH), which is provided for sampling a signal,
   - in which there is a subtraction element (DIF) which is provided in order to produce a signal which is delayed by a predetermined pulse interval $(T_s)$ from an original signal and is the inverse of the original signal, and
   - in which this sample-and-hold element (AH) and the subtraction element (DIF) are arranged such that they are supplied with a signal which has been demodulated by the demodulator (DM), and in that the signal produced by the subtraction element (DIF) is supplied to the sample-and-hold element (AH).

2. Pulse-Doppler sensor according to Claim 1,

   - in which the means for producing the pulse sequence (PG, L, VL) has a pulse generator (PG) for producing the reference pulse (RP), and a delay element (LV) for producing the target pulse (ZP).

3. Pulse-Doppler sensor according to Claim 2,

   - in which the delay element has a delay line (LV) which is connected in parallel with a line (L),
   - in which the delay line (LV) is longer than the line (L) by the length which corresponds to the pulse interval $(T_S)$.

4. Pulse-Doppler sensor according to Claim 2,

   - in which the delay element has a delay line (LV) which has an open circuit at one of its ends and is connected to a diode (Di) and to a line (L) at its other end,
   - in which the diode (Di) is connected to the pulse generator (PG).

5. Pulse-Doppler sensor as claimed in one of Claims 1 - 4,

   - in which the subtraction element (DIF) has a memory using which a signal $(S2(t_0))$ is stored until the next signal $(S2(t_2))$ is available.

6. Pulse-Doppler sensor according to Claim 5,

   - in which the memory of the subtraction element (DIF) has a short-circuited conductor (LL2) at whose end the inversion of the signal takes place, and
   - in which the length of the short-circuited conductor (LL2) corresponds to the pulse interval $(T_s)$.

7. Pulse-Doppler sensor according to one of Claims 1 to 6,

   - in which the switching element (S) is an element for amplitude modulation.

Fig. 1

Fig. 2

Fig. 3

Fig. 4